(19) Europäisches Patentamt
European Patent Office
Office européen des brevets

(11) Veröffentlichungsnummer: **0 288 850**
**B1**

(12) **EUROPÄISCHE PATENTSCHRIFT**

(45) Veröffentlichungstag der Patentschrift: **16.01.91**

(51) Int. Cl.$^5$: **C 07 C 211/21**, C 07 C 211/26, A 01 N 33/04

(21) Anmeldenummer: **88106106.3**

(22) Anmeldetag: **16.04.88**

(54) **Aminoverbindungen und diese enthaltende Fungizide.**

(30) Priorität: **25.04.87 DE 3713934**

(43) Veröffentlichungstag der Anmeldung:
**02.11.88 Patentblatt 88/44**

(45) Bekanntmachung des Hinweises auf die Patenterteilung:
**16.01.91 Patentblatt 91/03**

(84) Benannte Vertragsstaaten:
**AT BE CH DE ES FR GB GR IT LI NL SE**

(56) Entgegenhaltungen:
**EP-A-0 161 455**
**EP-A-0 224 163**
**DE-A-2 752 135**

(73) Patentinhaber: **BASF Aktiengesellschaft**
**Carl-Bosch-Strasse 38**
**D-6700 Ludwigshafen (DE)**

(72) Erfinder: **Himmele, Walter, Dr.**
**Eichenweg 14**
**D-6909 Walldorf (DE)**
Erfinder: **Sauter, Hubert, Dr.**
**Neckarpromenade 20**
**D-6800 Mannheim 1 (DE)**
Erfinder: **Siegel, Hardo, Dr.**
**Hans-Purrmann-Allee 25**
**D-6720 Speyer (DE)**
Erfinder: **Ammermann, Eberhard, Dr.**
**Sachsenstrasse 3**
**D-6700 Ludwigshafen (DE)**
Erfinder: **Pommer, Ernst-Heinrich, Dr.**
**Berliner Platz 7**
**D-6703 Limburgerhof (DE)**

**Die Akte enthält technische Angaben, die nach dem Eingang der Anmeldung eingereicht wurden und die nicht in dieser Patentschrift enthalten sind.**

EP 0 288 850 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft Aminoverbindungen, diese enthaltende Fungizide und die Bekämpfung von Pilzen mit diesen Verbindungen.

Est ist bekannt, N-Tridecyl-2,6-dimethylmorpholin (DE—1 164 152) oder 3-para-Isopropylphenyl-2-methyl-1-(N,N-dialkyl-amino)-propane (DE—2 825 961) oder N-(3-[-tert.-butylphenyl]-2-methyl-propyl)-2,6-di-methylmorpholin (DE—2 752 135) als Fungizide zu verwenden. Ihre fungizide Wirkung ist jedoch nicht voll befriedigend.

Es wurde nun gefunden, daß Aminoverbindungen der Formel

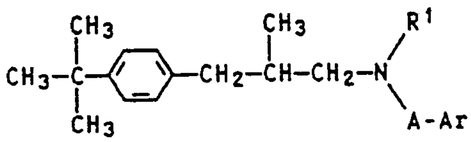

in der

$R^1$ einen Alkylrest mit bis zu 3 C-Atomen,

A einen Alkylenrest mit bis zu 4 C-Atomen oder einen Alkenylenrest mit bis zu 3 C-Atomen und

Ar einen gegebenenfalls substituierten Arylrest bedeuten

und ihre Säureadditionssalze eine gute fungizide Wirkung haben, die besser als die der Bekannten Fungizide ist.

$R^1$ bedeutet beispielsweise Methyl, Ethyl, Propyl, Isopropyl.

A bedeutet beispielsweise Methylen, Ethylen, Propylen, Butylen, Propenylen.

A—Ar bedeutet beispielsweise Phenylalkyl, z.B. Phenylmethyl (Benzyl), 2-Phenylethyl, 1-Phenylethyl, 3-Phenylpropyl, 3-Phenyl-2-methylpropyl, 2-Phenylpropyl 3-Phenyl-2-propenyl, Indan-1-ylmethyl oder den Rest

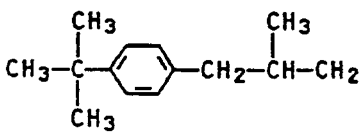

oder

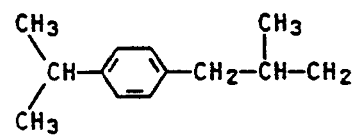

Ar bedeutet beispielsweise Phenyl oder Indanyl.

Der Phenylrest kann gegebenenfalls substituiert sein durch Alkyl mit bis zu 4 C-Atomen. Der Alkylenrest kann gegebenenfalls durch Alkyl mit bis zu 2 C-Atomen substituiert sein. Säureadditionssalze sind die Salze mit anorganischen oder organischen Säuren, z.B. Halogenwasserstoffsäuren (Salzsäure, Bromwasserstoffsäure), Schwefelsäure, Essigsäure, Dodecylbenzolsulfonsäure.

Die Verbindungen werden hergestellt beispielsweise durch Umsetzung einer Verbindung der Formel

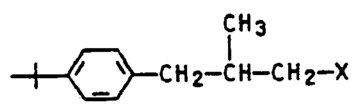

worin X eine Abgangsgruppe wie Chlor, Brom, $—OSO_2—CH_3$ oder

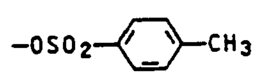

bedeuten, mit einem Amin der Formel

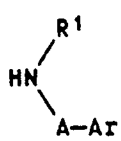

Sie können ferner hergestellt werden beispielsweise durch Umsetzung von Aminen mit Carbonylverbindungen nach der Methode der aminierenden Hydrierung, z.B. die Verbindung 2 durch Umsetzung von Benzaldehyd unter den Bedingungen einer katalytischen Hydrierung oder mit Ameisensäure mit einem Amin der Formel

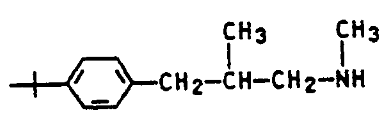

oder durch Umsetzung eines Amins der Formel

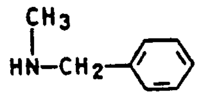

mit einer Carbonylverbindung der Formel

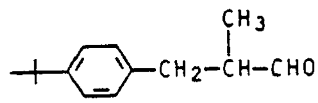

Durch Umsetzung von 3-(tert.-Butylphenyl)-2-methyl-propyl-1-chlorid mit N-Methyl-N-benzylamin erhält man die Verbindung

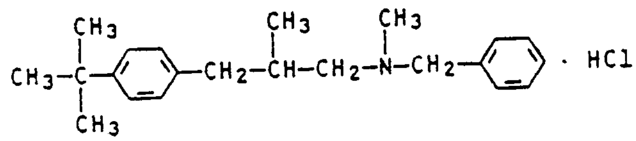

mit dem Schmelzpunkt Fp 170°C (Verbindung Nr. 10).

Aus dieser Verbindung erhält man mit Alkali die Verbindung

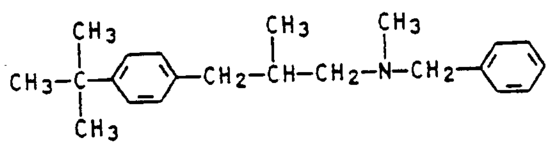

mit dem Siedepunkt $Kp_5$ 180—190°C (Verbindung Nr. 2).

Herstellungsbeispiel 1

3-(p-tert.-Butyl-phenyl)-2-methyl-propyl-(N-methyl-N-benzylamin)

In einem 4-1-Rührkolben werden 876 g (4 Mol) 3-(p-tert.-Butyl-phenyl)-2-methyl-1-methylamino-propan vorgelegt. Unter Rühren werden 424 g Benzaldehyd zugetropft. Das Gemisch wird milchig und erwärmt sich leicht. Als Schleppmittel werden 400 g Toluol zugegeben.

Die Mischung wird zum Sieden erhitzt (140 bis 188°C), aus dem Destillat das Wasser abgetrennt und das Toluol in die Mischung zurückgeführt. Es werden 55 g = 3,05 Mol Wasser abgetrennt. Der Vorgang benötigt unter den genannten Bedingungen drei Stunden.

Zur Reduktion des entsprechenden Enamins werden im Verlauf von 4,5 Stunden bei einer Temperatur von 125 bis 140°C 193 g 98%ige (Geww.%) Ameisensäure zugetropft. Es entwickelt sich $CO_2$.

Das Amin wird durch fraktionierte Destillation isoliert. $Kp_5$ 180 bis 190°C. Es werden 591 g des Amins isoliert, dies entspricht einer Ausbeute von 48%.

Herstellungsbeispiel 2

Das in Beispiel 1 genannte Amin wurde durch Umsetzung von 3-(p.-tert.-Butyl-phenyl)-2-methyl-propanal mit Methylbenzylamin und Ameisensäure als Reduktionsmittel hergestellt. Die Ausbeute an Amin beträgt hier 63%. Das Amin geht bei 5 mbar zwischen 180 und 190°C über. In beiden Fällen wird das Amin in über 97%iger Reinheit erhalten.

Herstellungsbeispiel 3

3-(p-tert.-Butyl-phenyl)-2-methyl-1-(N-methyl-N-2-phenylpropyl-1)-propylamin (Verbindung 3)

In der unter Beispiel 2 beschriebenen Weise werden 1201 g (8 Mol) 2-Phenyl-propylamin mit 1632 g 3-(p.-tert.-Butyl-phenyl)-2-methyl-propanal zum Enamin umgesetzt. Die Reduktion wird bei 122 bis 140° mit Ameinsäure durchgeführt. Es werden 2082 g Amin als 96%iges Produkt in einem Siedebereich bei 0,3 mbar von 136 bis 140°C erhalten. Die Ausbeute beträgt 78%.

In entsprechender Weise werden die folgenden Verbindungen erhalten.

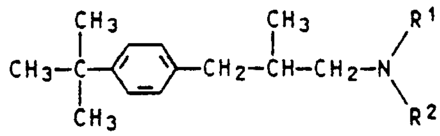

Tabelle 1

| Verbindung Nr. | $R^1$ | $R^2$ | Fp°C | Kp mbar/°C |
|---|---|---|---|---|
| 1 | $CH_3$ | 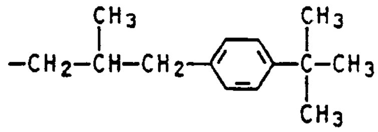 | | 0,3/195-200 |
| 2 | $CH_3$ | benzyl | | 5/180-190 |
| 3 | $CH_3$ | 2-phenyl-prop-1-yl | | 0,3/136-140 |
| 4 | $CH_3$ | 3-phenyl-but-1-yl | | 5/207-220 |
| 5 | $CH_3$ | indan-1-ylmethyl | | 5/178-196 |
| 6 | $CH_3$ | 3-phenyl-2-propen-1-yl | | 5/210-215 |
| 7 | $CH_3$ | 3-phenyl-prop-1-yl | | 0,3/165-167 |
| 8 | $CH_3$ | 1-phenyl-ethyl | | 5/180-185 |
| 9 | $CH_3$ | 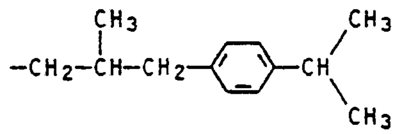 | | 0,3/190-195 |
| 10 | $CH_3$ | benzyl·Hydrochlorid | 170 | |
| 11 | $CH_3$ | 2-phenyl-prop-1-yl·Hydrochlorid | 180 | |
| 12 | $CH_3$ | 3-phenyl-but-1-yl·Hydrochlorid | 198 | |
| 13 | $CH_3$ | indan-1-ylmethyl·Hydrochlorid | 205 | |
| 14 | $CH_3$ | 3-phenyl-2-propen-1-yl·Hydrochlorid | 195 | |
| 15 | $CH_3$ | 3-phenyl-prop-1-yl·Hydrochlorid | 158 | |
| 16 | $CH_3$ | benzyl·Hydrobromid | 156 | |

Die neuen Verbindungen zeichnen sich, allgemein ausgedrückt, durch eine hervorragende Wirksamkeit gegen ein breites Spektrum von pflanzenpathogenen Pilzen, insbesondere aus der Klasse der Ascomyceten, und Basidiomyceten, aus. Sie sind zum Teil systemisch wirksam und können als Blatt- und Bodenfungizide eingesetzt werden.

Besonders interessant sind die fungiziden Verbindungen für die Bekämpfung einer Vielzahl von Pilzen an verschiedenen Kulturplfanzen oder ihren Samen, insbesondere Weizen, Roggen, Gerste, Hafer, Reis, Mais, Rasen, Baumwolle, Soja, Kaffee, Zukerrohr, Obst und Zierpflanzen im Gartenbau Weinbau sowie Gemüse — wie Gurken, Bohnen und Kürbisgewächse —.

Die neuen Verbindungen sind insbesondere geeignet zur Bekämpfung folgender Pflanzenkrankheiten:

Erysiphe graminis (echter Mehltau) in Getreide,
Erysiphe cichoracearum und Sphaerotheca fuliginea an Kürbisgewäschen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,

Pseudocercosporella herpotrichoides an Weizen, Gerste,
Pyricularia oryzae an Reis
Phytophthora infestans an Kartoffeln und Tomaten,
Fusarium- und Verticillium-Arten an verschiedenen Pflanzen.

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfstoffe kommen dafür im wesentlichen in Frage: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene un anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% Wirkstoff.

Die Aufwandmengen liegen je nach Art des gewünschten Effektes zwischen 0,02 und 3 kg Wirkstoff oder mehr je ha. Die neuen Verbindungen können auch im Materialschutz eingesetzt werden, z.B. gegen Paecilomyces variotii.

Einige der neuen Verbindungen haben sehr gute Wirksamkeit gegen humanpathogene Pilze, wie Trichophyton mentagrophytes und Candida albicans.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernebeln, Verstäuben, Verstreuen, Beizen oder Gießen.

Beispiele für solche Zubereitungen sind:

I. Man vermischt 90 Gew.-Teile der Verbindung Nr. 2 mit 10 Gew.-Teilen N-Methyl-α-pyrrolidon und erhält eine Lösung, die zur Anwendung in Form kleinster Tropfen geeignet ist.

II. 20 Gew.-Teile der Verbindung Nr. 4 werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen des Anlagerungsproduktes und 40 Mol Ethylenoxid an 1 Mol Ricinusöl besteht. Durch Ausgießen und feines Verteilen der Lösung in Wasser erhalt man eine wäßrige Disperion.

III. 20 Gew.-Teile der Verbindung Nr. 6 werden in einer Mischung gelöst, die aus 40 Gew.-Teilen Cyclohexanon, 30, Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Verbindung Nr. 7 werden in einer Mischung gelöst, die aus 25 Gew.-Teilen Cyclohexanol, 65 Gew.-Teilen einer Mineralölfraktion vom Siedepunkt 210 bis 280°C and 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gew.-Teile der Verbindung Nr. 8 werden mit 3 Gew.-Teilen des Natriumsalzes der Diisobutylnaphthalin-α-sulfonsäure, 10 Gew.-Teilen des Natriumsalzes einer Liginsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Verbindung Nr. 21 werden mit 97 Gew.-Teilen feinteiligem Kaolin innig vermischt. Man erhält auf diese Weise ein Stäubemittel, das 3 Gew.% des Wirkstoffs enthält.

VII. 30 Gew.-Teile der Verbindung Nr. 23 werden mit einer Mischung aus 92 Gew.-Teilen pulverförmigen Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Verbindung Nr. 3 werden mit 10 Gew.-Teilen Natriumsalz eines Phenolsulfonsäure-harnstoff-formaldehyd-Kondensates, 2 Gew.-Teilen Kieselgel und 48 Gew.-Teilen Wasser innig vermischt. Man erhält eine stabile wäßrige Dispersion. Durch Verdünnen mit Wasser erhält man eine wäßrige Dispersion.

IX. 20 Gew.-Teile der Verbindung Nr. 4 werden mit 2 Gew.-Teilen Calciumsalz der Dodecylbenzolsulfonsäure, 8 Gew.-Teilen Fettalkoholpolyglykolether, 2 Gew.-Teilen Natriumsalz eines Phenolsulfonsäure-harnstoff-formaldehyd-Kondensats und 68 Gew.-Teilen eines paraffinischen Mineralöls inning vermischt. Man erhält eine stabile ölige Dispersion.

Die erfindungsgemäßen Mittel können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Die folgende Liste von Fungiziden, mit denen die erfindungsgemäßen Verbindungen kombiniert werden können, soll die Kombinationsmöglichkeiten erläutern, nicht aber einschränken.

Fungizide, die mit den erfindungsgemäßen Verbindungen kombiniert werden können, sind beispielsweise:

Schwefel,
Dithiocarbamate und deren Derivate, wie
- Ferridimethyldithiocarbamat,
- Zinkdimethyldithiocarbamat,
- Zinkethylenbisdithiocarbamat,
- Manganethylenbisdithiocarbamat,
- Mangan-Zink-ethylendiamin-bis-dithiocarbamat,
- Tetramethylthiuramidisulfide,
- Ammoniak-Komplex von Zink-(N,N-ethylen-bis-dithiocarbamat),
- Ammoniak-Komplex von Zink-(N,N'-propylen-bis-dithiocarbamat),
- Zink-(N,N'-Propylen-bis-dithiocarbamat),
- N,N'-Polypropylen-bis-(thiocarbamoyl)-disulfid;

Nitroderivate, wie
- Dinitro-(1-methylheptyl)-phenylcrotonat,
- 2-sec-Butyl-4,6-dinitrophenyl-3,3-dimethylacrylat,
- 2-sec-Butyl-4,6-dinitrophenyl-isopropylcarbonat;
- 5-Nitro-isophthalsäure-di-isopropylester

heterocyclische Substanzen, wie
- 2-Heptadecyl-2-imidazolin-acetat,
- 2,4-Dichlor-6-(o-chloranilino)-s-triazin,
- O,O-Diethyl-phthalimidophosphonothioat,
- 5-Amino-1-[bis-(dimethylamino)-phospinyl]-3-phenyl-1,2,4-triazol,
- 2,3-Dicyano-1,4-dithioanthrachinon,
- 2-Thio-1,3-dithio-(4,5-b)-chinoxalin,
- 1-(Butylcarbamoyl)-2-benzimidazol-carbaminsäuremethylester,
- 2-Methoxycarbonylamino-benzimidazol,
- 2-(Furyl-(2))-benzimidazol,
- 2-(Thiazolyl-(4))-benzimidazol,
- N-(1,1,2,2-Tetrachlorethylthio)-tetrahydrophthalimid,
- N-Trichlormethylthio-tetrahydrophthalimid,
- N-Trichlormethylthio-phthalimid,
- N-Dichlorfluormethylthio-N',N'-dimethyl-N-phenyl-schwefelsäurediamid,
- 5-Ethoxy-3-trichlormethyl-1,2,3-thiadiazol,
- 2-Rhodanmethylthiobenzthiazol,
- 1,4-Dichlor-2,5-dimethoxybenzol,
- 4-(2-Chlorphenylhydroazano)-3-methyl-5-isoxazolon,
- Pyridin-2-thio-1-oxid,
- 8-Hydroxychinolin bzw. dessen Kupfersalz,
- 2,3-Dihydro-5-carboxanilido-6-methyl-1,4-oxathiin,
- 2,3-Dihydro-5-carboxanilido-6-methyl-1,4-oxathiin-4,4-dioxid,
- 2-Methyl-5,6-dihydro-4H-pyran-3-carbonsäure-anilin,
- 2-Methyl-furan-3-carbonsäureanilid,
- 2,5-Dimethyl-furan-3-carbonsäureanilid,
- 2,4,5-Trimethyl-furan-3-carbonsäureanilid,
- 2,5-Dimethyl-furan-3-carbonsäurecyclohexylamid,
- N-Cyclohexyl-N-methoxy-2,5-dimethyl-furan-3-carbonsäureamid,
- 2-Methyl-benzoesäure-anilid,
- 2-Iod-benzoesäure-anilid,
- N-Formyl-N-morpholin-2,2,2-trichlorethylacetal,
- Piperazin-1,4-diylbis-(1-(2,2,2-trichlor-ethyl)-formamid,
- 1-(3,4-Dichloranilino)-1-formylamino-2,2,2-trichlorethan,
- 2,6-Dimethyl-N-tridecyl-morpholin bzw. dessen Salze,
- 2,6-Dimethyl-N-cyclodedecyl-morpholin bzw. dessen Salze,
- N-[3-(p-tert.-Butylphenyl)-2-methylpropyl]-cis-2,6-dimethylmorpholin,

N-[3-(p-tert.-Butylphenyl)-2-methylpropyl]-piperidin,
1-[2-(2,4-Dichlorphenyl)-4-ethyl-1,3-dioxolan-2-yl-ethyl]-1H-1,2,4-triazol,
1-[2-(2,4-Dichlorphenyl)-4-n-propyl-1,3-dioxolan-2-yl-ethyl]-1H-1,2,4-triazol,
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenoxy)-3,3-dimethyl-1-(1H-1,2,4-triazol-1-yl)-2-butanol,
α-(2-Chlorophenyl)-α-(4-chlorphenyl)-5-pyrimidin-methanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol.

sowie verschiedene Fungizide, wie
Dodecylguanidinacetat,
3-[3-(3,5-Dimethyl-2-oxycyclohexyl)-2-hydroxyethyl]-glutarimid,
Hexachlorbenzol,
DL-Methyl-N-(2,6-dimethyl-phenyl)-N-furoyl(2)-alaninat,
DL-N-(2,6-Dimethyl-phenyl)-N-(2'-methoxyacetyl)-alanin-methylester,
N-(2,6-Dimethylphenyl)-N-chloracetyl-D,L-2-aminobutyrolacton,
DL-N-(2,6-Dimethylphenyl)-N-(phenylacetyl)-alaninmethylester,
5-Methyl-5-vinyl-3-(3,5-dichlorphenyl)-2,4-dioxo-1,3-oxazolidin,
3-[3,5-Dichlorphenyl(-5-methyl-5-methoxymethyl]-1,3-oxazolidin-2,4-dion,
3-(3,5-Dichlorphenyl)-1-isopropylcarbamoylhydantoin,
N-(3,5-Dichlorphenyl)-1,2-dimethylcyclopropan-1,2-dicarbonsäureimid,
2-Cyano-[N-(ethylaminocarbonyl)-2-methoximino]-acetamid,
1-[2-(2,4-Dichlorphenyl)-pentyl)-1H-1,2,4-triazol,
2,4-Difluor-α-(1H-1,2,4-triazolyl-1-methyl)-benzhydrylalkohol,
N-(3-Chlor-2,6-dinitro-4-trifluormethyl-phenyl)-5-trifluormethyl-3-chlor-2-aminopyridin,
1-((bis-(4-Fluorphenyl)-methylsilyl)-methyl)-1H-1,2,4-triazol.

## Anwendungsbeispiele

Als Vergleichswirkstoff wurde N-Tridecyl-2,6-dimethylmorpholin (A) — bekannt aus DE 11 64 152 — benutzt.

## Anwendungsbeispiel 1

Wirksamkeit gegen Weizenbraunrost

Blätter von in Töpfen gewachsenen Weizensämlingen der Sorte "Jubilar" wurden mit Sporen des Braunrostes (Puccinia recondita) bestäubt. Danach werden die Töpfe für 24 Stunden bei 20 bis 22°C in eine Kammer mit hoher Luftfeuchtigkeit (90 bis 95%) gestellt. Während dieser Zeit keimten die Sporen aus und die Keimschläuche drangen in das Blattgewebe ein. Die infizierten Pflanzen wurden anschließend mit wäßrigen Spritzbrühen, die 80% Wirkstoff und 20% Emulgiermittel in der Trockensubstanz enthielten, tropfnaß gespritzt. Nach dem Antrocknen des Spritzbelages wurden die Versuchspflanzen im Gewächshaus bei Temperaturen zwischen 20 und 22°C und 65 bis 70% relativer Luftfeuchte aufgestellt. Nach 8 Tagen wurde das Ausmaß der Rostpilzentwicklung auf den Blättern ermittelt.

Das Ergebnis des Versuches zeigt, daß beispielsweise bei der Anwendung als 0,05%ige (Gew.-%) wäßrige Spritzbrühe die Verbindungen Nr. 3, 4, 6, 7, 8, 10, 11, 12 und 15 eine bessere fungizide Wirkung (97%) haben als der bekannte Vergleichswirkstoff A (70%).

## Anwendungsbeispiel 2

Wirksamkeit gegen Gurkenmehltau

Blätter von in Töpfen gewachsenen Gurkenkeimlingen der Sorte "Chinesische Schlange" wurden im Zweiblattstadium mit einer Sporensuspension des Gurkenmehltaus besprüht. Nach etwa 20 Stunden wurden die Versuchspflanzen mit wäßriger Spritzbrühe, die 80% Wirkstoff und 20% Emulgiermittel in der Trockensubstanz enthielt, bis zur Tropfnässe besprüht. Nach dem Antrocknen des Spritzbelages wurden sie anschließend im Gewächshaus bei Temperaturenn zwischen 20 und 22°C und 70 bis 80% relativer Luftfeuchtigkeit aufgestellt. Zur Beurteilung der Wirksamkeit der neuen Stoffe wurde das Ausmaß der Pilzentwicklung nach 21 Tagen ermittelt.

Das Ergebnis des Versuches zeigt, dasß beispielsweise bei der Anwendung als 0,05-%ige Spritzbrühe die Verbindungen Nr. 5, 6, 7, 10, 12, 13, 14 und 15 eine bessere fungizide Wirkung zeigen (97%) als der Vergleichswirkstoff A (70%).

**Patentansprüche**

1. Aminoverbindungen der Formel

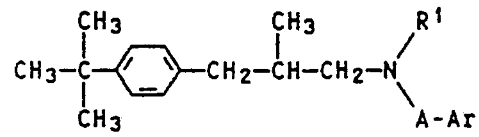

in der

$R^1$ einen Alkylrest mit bis zu 3 C-Atomen,

A einen Alkylenrest mit bis zu 4-C-Atomen oder einen Alkylenylrest mit bis zu 3 C-Atomen und

Ar einen gegebenenfalls substituierten Arylrest bedeuten

und ihre Säureadditionssalze.

2. Fungizides Mittel enthaltend einen Trägerstoff und eine Aminoverbindung der Formel

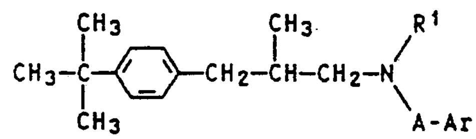

in der

$R^1$ einen Alkylrest mit bis zu 3 C-Atomen,

A einen Alkylenrest mit bis zu 4-C-Atomen oder einen Alkenylenrest mit bis zu 3 C-Atomen und

Ar einen gegebenenfalls substituierten Arylrest bedeuten

oder ihr Säureadditionssalz.

3. Verfahren zur Bekämpfung von Pilzen, dadurch gekennzeichnet, daß man die Pilze oder die durch Pilzbefall bedrohten Materialien, Pflanzen, Erdboden oder Saatgüter mit einer fungizid wirksamen Menge einer Aminoverbindung der Formel

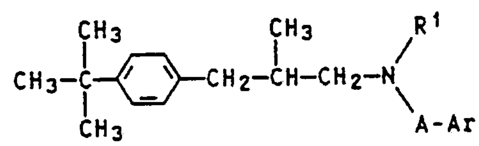

in der

$R^1$ einen Alkylrest mit bis zu 3 C-Atomen,

A einen Alkylenrest mit bis zu 4-C-Atomen oder einen Alkenylenrest mit bis zu 3 C-Atomen und

Ar einen gegebenenfalls substituierten Arylrest bedeuten

oder ihrem Säureadditionssalz behandelt.

4. Aminoverbindung gemäß Anspruch 1 in der

$R^1$ Methyl und

A—Ar Benzyl bedeuten.

5. Aminoverbindung gemäß Anspruch 1 in der

$R^1$ Methyl und

A—Ar 3-Phenyl-prop-1-yl bedeuten.

**Revendications**

1. Dérivés aminés répondant à la formule

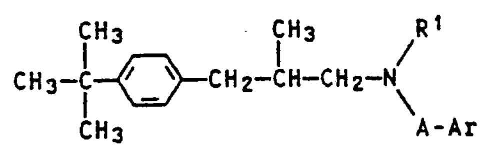

dans laquelle

$R^1$ représente un groupe alkyle contenant jusqu'à 3 atomes de carbone,

A représente un groupe alkylène contenant jusqu'à 4 atomes de carbone ou alcénylène contenant jusqu'à 3 atomes de carbone, et

Ar représente un groupe aryle éventuellement substitué,

et leurs sels formés par addition avec des acides.

2. Produit fongicide contenant un véhicule et un dérivé aminé de formule

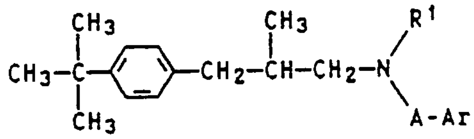

dans laquelle
R[1] représente un groupe alkyle contenant jusqu'à 3 atomes de carbone,
A représente un groupe alkylène contenant jusqu'à 4 atomes de carbone ou alcénylène contenant jusqu'à 3 atomes de carbone, et
Ar représente un groupe aryle éventuellement substitué,
ou l'un de ses sels formé par addition avec un acide.

3. Procédé pour combattre les mycètes, caractérisé en ce que l'on traite les mycètes ou les matériaux, végétaux, sols ou semences menacés d'une attaque par des mycètes, par une quantité fongicide efficace d'un dérivé aminé de formule

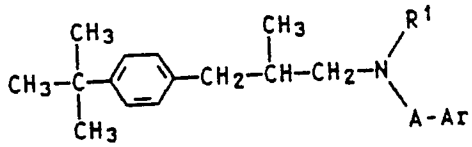

dans laquelle
R[1] représente un groupe alkyle contenant jusqu'à 3 atomes de carbone,
A représente un groupe alkylène contenant jusqu'à 4 atomes de carbone ou alcénylène contenant jusqu'à 3 atomes de carbone,
Ar représente un groupe aryle éventuellement substitué,
ou d'un de ses sels formé par addition avec un acide.

4. Dérivé aminé selon la revendication 1, pour lequel
R[1] représente un groupe méthyle, et
A—Ar représente un groupe benzyle.

5. Dérivé aminé selon la revendication 1, pour lequel
R[1] représente un groupe méthyle, et
A—Ar représente un groupe 3-phényl-propa-1-yle.

**Claims**

1. An amino compound of the formula

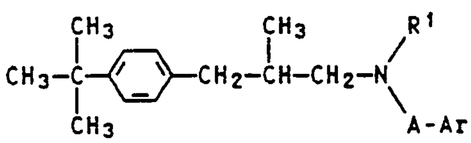

where
R[1] is alkyl of not more than 3 carbon atoms,
A is alkylene of not more than 4 carbon atoms or alkenylene of not more than 3 carbon atoms and
Ar is unsubstituted or substituted aryl,
and its acid addition salts.

2. A fungicide containing a carrier and an amino compound of the formula

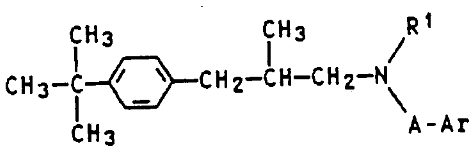

where
R[1] is alkyl of not more than 3 carbon atoms,
A is alkylene of not more than 4 carbon atoms or alkenylene of not more than 3 carbon atoms and
Ar is unsubstituted or substituted aryl,
or one of its acid addition salts.

3. A method for controlling fungi, wherein the fungi or the materials, plants, soil or seeds threatened by fungal attack are treated with a fungicidal amount of an amino compound of the formula

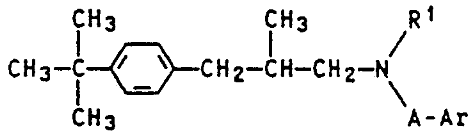

where
$R^1$ is alkyl of not more than 3 carbon atoms,
A is alkylene of not more than 4 carbon atoms or alkenylene of not more than 3 carbon atoms and
Ar is unsubstituted or substituted aryl,
or one of its acid addition salts.

4. An amino compound as claimed in claim 1, where
$R^1$ is methyl and
A—Ar is benzyl.

5. An amino compound as claimed in claim 1, where
$R^1$ is methyl and
A—Ar is 3-phenylprop-1-yl.